# EUROPÄISCHE PATENTANMELDUNG

(11) **EP 1 253 062 A2**
(43) Veröffentlichungstag der Anmeldung: **30.10.2002**
(21) Anmeldenummer: 02003768.5
(22) Anmeldetag: 20.02.2002
(51) Int. Cl.: B62D 6/00, B62D 5/04, B62D 101/00, B62D 109/00, B62D 113/00, B62D 119/00, B62D 137/00, B62D 153/00

(54) **Überlagerungslenksystem für Kraftfahrzeuge**

(30) Priorität: 30.03.2001 DE 10115802
(71) Anmelder: Bayerische Motoren Werke Aktiengesellschaft, 80809 München (DE)
(72) Erfinder: Pauly, Axel, Dr., 85757 Karlsfeld (DE); Baumgarten, Götz, Dr., 85757 Karlsfeld (DE)

(57) **Zusammenfassung**

Die Erfindung betrifft ein Überlagerungslenksystem für ein Kraftfahrzeug mit einer mechanischen Lenkvorrichtung (1) für die Übertragung eines Lenkdrehmomentes (ML) mit einem vorgegebenen Übertragungsverhältnis (i_{ML}) auf wenigstens ein gelenktes Rad (2).

Um eine zuverlässige Zentrierung für eine Überlagerungslenkeinrichtung eines Kraftfahrzeugs zu schaffen, umfasst das Überlagerungslenksystem einen mit dem wenigstens einen gelenkten Rad (2) verbundenen Radwinkelsensor (5) zum Erzeugen eines einem Winkel (α) des wenigstens einen gelenkten Rades (2) entsprechenden Radwinkelsignals (sα), eine Vergleichseinrichtung (6) für das Vergleichen des Lenkwinkelsignals (sδ) und des Radwinkelsignals (sα) und für das Erzeugen eines Vergleichssignals (sv) in Abhängigkeit von dem Lenkwinkel (δ) und dem Radwinkel (α), und einen elektromechanischen Wandler (7) für das Erzeugen des Überlagerungsdrehmomentes (MÜ), wenn das Vergleichssignal (sv) eine Abweichung von einer vorgegebenen Beziehung zwischen dem Lenkwinkel (δ) und dem Radwinkel (α) des wenigstens einen gelenkten Rades (2) anzeigt, so dass die Abweichung reduziert wird.

## Beschreibung

Die Erfindung betrifft ein Überlagerungslenksystem für Kraftfahrzeuge gemäß dem Oberbegriff des Anspruchs 1.

Aus DE 198 59 806 ist ein Lenksystem für Kraftfahrzeugs bekannt, bei dem der Fahrer bei Normalbetrieb über eine Lenkhandhabe einen Lenkwinkel-lstwertgeber stellt und eine Steuer- und Regelanordnung die gelenkten Fahrzeugräder mittels eines motorischen Stellaggregates entsprechend betätigt. Für den Notfall ist eine sich automatisch einschaltende Zwangskopplung zwischen Lenkhandhabe und gelenkten Fahrzeugrädern vorgesehen. Diese Zwangskopplung ist so ausgebildet, dass ein Zentriermodus einschaltbar ist, bei dem sich bei zumindest teilweise ausgeschalteter Zwangskopplung das Lenkhandrad verstellen lässt, bis eine Stellung erreicht ist, derart dass das Lenkhandrad bei Geradesausstellung der gelenkten Fahrzeugräder eine vorgesehene Normallage einnimmt.

Der Nachteil dieses Standes der Technik besteht darin, dass das Umschalten von einer rein elektronischen Steuerung (steer by wire) auf die mechanische Zwangskopplung zwischen Lenkhandhabe und Fahrzeugrädern grundsätzlich eine mögliche Fehlerquelle darstellt.

Aufgabe der Erfindung ist es daher, ein zuverlässiges Zentriersystem für eine Überlagerungslenkeinrichtung eines Kraftfahrzeugs zu schaffen, wobei die Überlagerungslenkeinrichtung eine feste, mechanische Verbindung zwischen der Lenkhandhabe und den Fahrzeugrädern aufweist.

Diese Aufgabe wird gelöst durch ein Überlagerungslenksystem für Kraftfahrzeuge mit den Merkmalen nach Anspruch 1. Bevorzugte Ausführungsformen der Erfindung sind Gegenstand der abhängigen Ansprüche.

Bei einem der Erfindung zugrundeliegenden aktiven Überlagerungslenksystem können zusätzlich zum Fahrerlenkwinkel mittels eines Überlagerungsaktuators von einem Rechner definierte Lenkwinkelkomponenten erzeugt werden. Auf diese Weise lässt sich die Weg- bzw. Winkelzuordnung zwischen Lenkvorrichtung und Lenkwinkel der Räder als Funktion von diversen Größen beeinflussen. Dabei bleibt eine dauernde mechanische Verbindung zwischen der Lenkvorrichtung, vorzugsweise dem Lenkrad und den gelenkten Rädern bestehen. Bei der ersten Inbetriebnahme des Systems, nach einer Störung oder bei Wiederinbetriebnahme, nachdem bei passiv geschaltetem Lenksystem gelenkt wurde, kann eine Abweichung von der im normalen Betriebszustand vorhandenen Zuordnung der Stellung der Lenkvorrichtung zur Stellung der gelenkten Räder vorliegen. Eine Abweichung kann weiterhin eintreten, wenn eine äußere, auf das Fahrzeug einwirkende Störgröße mit Hilfe einer geregelten Lenkwinkelkomponente kompensiert wird, während das Fahrzeug zum Stillstand gebracht wird.

Bei dem erfindungsgemäßen Verfahren wird ein Offset zwischen der Stellung der Lenkvorrichtung und der gelenkten Räder auf eine für den Fahrer entweder nicht bemerkbare, auf jeden Fall nicht störende und für die Sicherheit unkritischen Weise beseitigt, indem die Möglichkeiten des Überlagerungsaktuators und des Rechners des aktiven Lenksystems genutzt werden, um die Lenkung zu zentrieren.

Das erfindungsgemäße Überlagerungslenksystem für ein Kraftfahrzeug mit einer mechanischen Lenkvorrichtung für die Übertragung eines Lenkdrehmomentes mit einem vorgegebenen Übertragungsverhältnis auf wenigstens ein gelenktes Rad, einem Überlagerungsaktuator zwischen der Lenkvorrichtung und dem wenigstens einen gelenkten Rad für die Überlagerung des Lenkdrehmomentes mit einem Überlagerungsdrehmoment zu einem Raddrehmoment und einem mit der Lenkvorrichtung verbundenen Lenkwinkelsensor zum Erzeugen eines einem Winkel der Lenkvorrichtung entsprechenden Lenkwinkelsignals, ist gekennzeichnet durch einen mit dem wenigstens einen gelenkten Rad verbundenen Radwinkelsensor zum Erzeugen eines einem Winkel des wenigstens einen gelenkten Rades entsprechenden Radwinkelsignals, eine Vergleichseinrichtung für das Vergleichen des Lenkwinkelsignals und des Radwinkelsignals und für das Erzeugen eines Vergleichssignals in Abhängigkeit von dem Lenkwinkel und dem Radwinkel, und einen elektromechanischen Wandler für das Erzeugen des Überlagerungsdrehmomentes, wenn das Vergleichssignal eine Abweichung von einer vorgegebenen Beziehung zwischen dem Lenkwinkel und dem Radwinkel des wenigstens einen gelenkten Rades anzeigt, so dass die Abweichung reduziert wird.

Insbesondere wird das Überlagerungsdrehmoment bei Stillstand des Fahrzeugs erzeugt, so dass sich die Stellung der mechanischen Lenkvorrichtung ändert, bis die Abweichung von der vorgegebenen Beziehung beseitigt ist.

Während der Fahrt wird das Überlagerungsdrehmoment derart erzeugt, dass es die gleiche Richtung wie das Lenkdrehmoment hat, so dass das aktuelle Übertragungsverhältnis größer als das vorgegebene Übertragungsverhältnis ist.

Darüber hinaus kann das Überlagerungsdrehmoment während der Fahrt in Abhängigkeit von dem Ausgangssignal eines Geschwindigkeitssensors bestimmt werden.

Weitere Parameter zur Bestimmung des Überlagerungsdrehmomentes während der Fahrt sind das Lenkdrehmoment und der Lenkwinkel.

Bei einer weiteren bevorzugten Ausführungsform wird ein akustisches und/oder optisches Signal ausgegeben, wenn das Vergleichssignal eine Abweichung von der vorgegebenen Beziehung zwischen dem Lenkwinkel und dem Radwinkel des wenigstens einen gelenkten Rades anzeigt oder wenn das Überlagerungsdrehmoment größer als ein vorgegebener Wert ist.

Bei einer weiteren bevorzugten Ausführungsform der Erfindung bleibt das Überlagerungsdrehmoment immer kleiner als ein vorgegebener Wert.

Bei einer weiteren bevorzugten Ausführungsform der Erfindung wird das Überlagerungsdrehmoment nur erzeugt, solange eine Bewegung des Fahrzeugs unterbunden ist.

Durch das erfindungsgemäße Überlagerungslenksystem wird die kinematische Verbindung zwischen dem Lenkrad und den Vorderrädern aufgetrennt, nicht aber die Momenten-Verbindung zwischen beiden. Das hat den Vorteil, dass für den Fahrer das "Lenkgefühl", d.h. die Rückmeldung von Fahrbahnunebenheiten etc. von den gelenkten Rädern an das Lenkrad über das Lenkmoment erhalten bleibt. Ferner wird das Lenkmoment des Fahrers weiterhin für die Verstellung der Räder genutzt.

Ein weiterer Vorteil der Erfindung besteht darin, dass sich bei dem Fahrzeug außer bei ungewöhnlichen Betriebszuständen nach der Auslieferung an einen Kunden schon beim Verlassen des Montagebandes die Zentrierung der Lenkvorrichtung automatisch einstellt. Darüber hinaus werden alle Abweichungen des Lenkradwinkels von einer Normalstellung bei Inbetriebnahme des Fahrzeugs oder während der Fahrt beseitigt, ein Werkstattaufenthalt ist nicht mehr erforderlich.

Weitere Merkmale und Vorteile der Erfindung ergeben sich aus der folgenden Beschreibung eines bevorzugten Ausführungsbeispiels, bei der auf die beigefügte Zeichnung Bezug genommen wird.

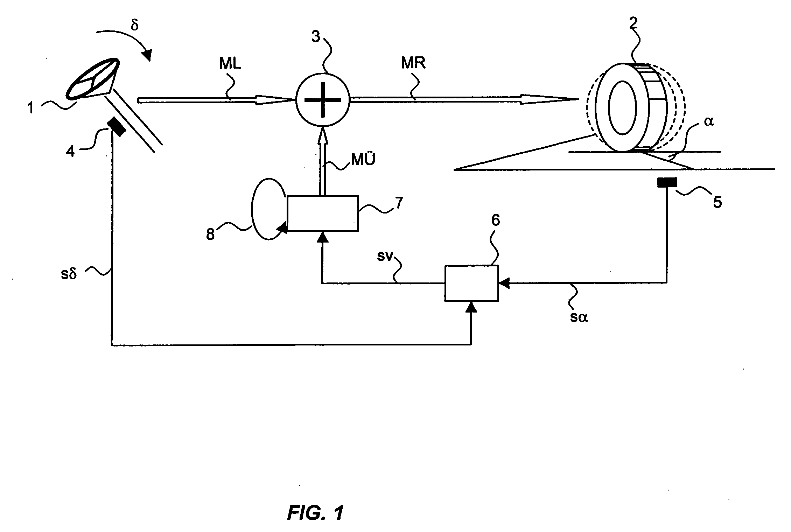

Fig. 1 zeigt ein Blockdiagramm einer Ausführungsform der Erfindung.

Das der Erfindung zugrundeliegende Überlagerungslenksystem für ein Kraftfahrzeug umfasst eine mechanische Lenkvorrichtung 1 für die Übertragung eines Lenkdrehmomentes ML auf wenigstens ein gelenktes Rad 2. Drehmomente werden in Fig. 1 als Doppelpfeile dargestellt, während (elektrische) Signale als einfache Pfeile gezeigt sind.

Durch die Ausübung eines Drehmomentes auf das gelenkte Rad 2 wird dieses aus einer Normalstellung in eine Schrägstellung oder umgekehrt aus einer Schrägstellung in eine Normalstellung gedreht. Die Normalstellung des Rades 2 ist in Fig. 1 gestrichelt gezeigt, das schräggestellte Rad 2 ist mit durchgezogenen Linien angedeutet.

Zwischen der Lenkvorrichtung 1 und dem gelenkten Rad 2 ist ein Überlagerungsaktuator (Überlagerungsgetriebe) 3 vorgesehen, damit dem Lenkdrehmoment ML ein Überlagerungsdrehmoment MÜ überlagert werden kann. Ein solches Überlagerungsdrehmoment MÜ wird im Stand der Technik z.B. dazu verwendet, die Lenkung aus Gründen des Bedienungskomforts und der Fahrsicherheit modulieren zu können.

Die Überlagerung aus Lenkdrehmoment (Betätigungsdrehmoment) ML und Überlagerungsdrehmoment MÜ wird hier als Raddrehmoment MR bezeichnet.

Ist das Überlagerungsdrehmoment MÜ null, so ist das Übertragungsverhältnis i_{ML} des Lenkdrehmoments ML auf die gelenkten Räder, d.h. das Verhältnis zwischen Lenkdrehmoment ML und Raddrehmoment MR im wesentlichen nur durch das Übersetzungsverhältnis des (nicht gezeigten) Lenkgetriebes gegeben. Dieser einfache Zusammenhang der beiden Drehmomente gilt nicht mehr, wenn ein Überlagerungsdrehmoment MÜ hinzukommt.

Um die Größe des Überlagerungsdrehmomentes MÜ in Abhängigkeit von dem Betätigungsmoment ML erzeugen zu können, wird das Ausgangssignal eines mit der Lenkvorrichtung 1 verbundenen Sensors ausgewertet. Dieser Sensor kann zum Erfassen des Lenkwinkels δ der Lenkvorrichtung 1 oder zum Erfassen des Lenkdrehmoments ML dienen. In der in Fig. 1 gezeigten Ausführungsform ist der Sensor ein Lenkwinkelsensors 4, der ein dem Lenkwinkel entsprechendes Lenkwinkelsignals sδ ausgibt.

Da wie oben bereits erwähnt der Fall eintreten kann, dass nach einer Störung oder bei Wiederinbetriebnahme des Systems, nachdem bei passiv geschaltetem Lenksystem gelenkt wurde, eine Abweichung von der im normalen Betriebszustand vorhandenen Zuordnung der Stellung der Lenkvorrichtung zur Stellung der gelenkten Räder vorliegen kann, ist das System mit einem Radwinkelsensor 5 versehen. Dieser Radwinkelsensor 5 ist mit dem wenigstens einen gelenkten Rad 2 verbunden. Er erzeugt ein Radwinkelsignals sα, das dem Winkel α des wenigstens einen gelenkten Rades 2 entspricht. Das Radwinkelsignal sα wird in einer Vergleichseinrichtung 6 mit dem Lenkwinkelsignal sδ von dem Lenkwinkelsensor 4 verglichen. In Abhängigkeit von dem Lenkwinkelsignal sδ und dem Radwinkelsignal sα wird durch die Vergleichseinrichtung 6 ein Vergleichssignal sv erzeugt, das die Beziehung zwischen dem Lenkwinkel δ und dem Radwinkel α wiedergibt. Mit anderen Worten, durch die Vergleichseinrichtung 6 wird festgestellt, ob das Lenkdrehmoment ML auch tatsächlich eine Änderung des Radwinkels α zur Folge hat, und wenn, wie groß sie ist. Die Beziehung zwischen dem Lenkwinkel δ und dem Radwinkel α ist i.a. derart, dass sich bei einer Normalstellung der Lenkvorrichtung 1 sich auch das Rad 2 in einer Normalstellung befindet, d.h. dass in der Normalstellung sowohl bei der Lenkvorrichtung 1 als auch bei dem Rad 2 die Winkel δ bzw. α jeweils einen Wert von null Grad haben.

Wenn diese Beziehung beispielsweise durch ein fehlerhaftes Überlagerungsdrehmoment MÜ verschoben wird (die Kurve, die die Zuordnung zwischen δ und α wiedergibt, durchläuft dann nicht mehr den Ursprung eines Koordinatensystems mit einer δ-Achse und einer α-Achse), so muss diese Beziehung zwischen δ und α aus Gründen des Komforts und der Fahrsicherheit sofort oder nach und nach wiederhergestellt werden. Dazu ist in der Ausführungsform nach Fig. 1 ein elektromechanischen Wandler 7 für das Erzeugen eines Überlagerungsdrehmomentes MÜ vorgesehen, der mit dem Vergleichssignal sv von der Vergleichseinrichtung 6 angesteuert wird. Wird durch das Vergleichssignal sv eine Abweichung in dem Verhältnis zwischen δ und α von der vorgegebenen Beziehung zwischen dem Lenkwinkel δ und dem Radwinkel α des Rades 2 angezeigt, so wird das Überlagerungsdrehmoment MÜ so festgelegt, dass die Abweichung zwischen momentanem Verhältnis und dem angestrebten Verhältnis zwischen dem Lenkwinkel δ und dem Radwinkel α reduziert wird.

Generell kann das kompensierende Überlagerungsdrehmoment MÜ ausschließlich bei Stillstand des Fahrzeugs, bei Stillstand und/oder bei Fahrt des Fahrzeugs oder ausschließlich bei Fahrt des Fahrzeugs erfolgen. Im ersten Fall wird der Fahrer beim Führen des Fahrzeugs gar nicht gestört, er muss aber nach Auftreten der Abweichung zwischen den beiden Winkeln δ und α warten, bis er das Fahrzeug abstellt. Im letzteren Fall wird die Abweichung direkt korrigiert, und der Fahrkomfort und die Fahrsicherheit sind nach einer Anpassungsphase sofort wiederhergestellt.

Ist der Verlust der Zuordnung zwischen der Stellung des wenigstens einen gelenkten Rades 2 und dem fahrerseitig eingegebenen Lenkvorgabesignal δₛₒₗₗ während der Fahrt erfolgt, so wird im ersten der genannten Fälle das Überlagerungsdrehmoment MÜ bei Stillstand des Fahrzeugs erzeugt. Stellt der Fahrer das Fahrzeug also nach der Fahrt ab, so wird der elektromechanische Wandler 7 aktiviert, so dass sich die Stellung der mechanischen Lenkvorrichtung 1 ändert, bis die Abweichung von der vorgegebenen Beziehung beseitigt ist. (Die Räder bleiben bei dieser Ausführungsform i.a. in Ruhe, nur die Stellung der Lenkvorrichtung 1 ändert sich, sobald der Fahrer die Lenkvorrichtung 1 loslässt.) Zur Sicherheit kann bei dieser Ausführungsform das Überlagerungslenksystem insbesondere so ausgelegt sein, dass das Überlagerungsdrehmoment MÜ nur erzeugt wird, solange eine Bewegung des Fahrzeugs unterbunden wird. Diese Sicherung kann dadurch erreicht werden, dass eine Betriebsbremse des Fahrzeugs betätigt sein muss, dass ein Antriebsstrang des Fahrzeugs unterbrochen sein muss, dass eine Feststellbremse des Fahrzeugs betätigt sein muss, dass das Starten des Motors unterbunden ist oder dass ein Automatikgetriebe in einer Parkstellung arretiert ist.

Im folgenden werden Korrekturen während der Fahrt erläutert. Um den Fahrer beim Führen des Fahrzeugs möglichst wenig zu stören, wenn das Überlagerungsdrehmoment MÜ während der Fahrt korrigierend in die Lenkung eingreift, wird das Überlagerungsdrehmoment MÜ so erzeugt, dass es die gleiche Richtung wie das Lenkdrehmoment ML hat. Dadurch wird sichergestellt, dass der Winkel α mehr als proportional zu dem Winkel δ geändert wird, das aktuelle Übertragungsverhältnis iₐₖₜ ist also größer als das ursprünglich (ohne Überlagerungsdrehmoment MÜ) vorgegebene Übertragungsverhältnis i_{ML}. Das Rad 2 wird mit anderen Worten progressiv weiter gedreht, als es der Fahrer mit der Betätigung der Lenkvorrichtung 1 vorgibt. (Alternativ kann das Überlagerungsdrehmoment MÜ auch degressiv eingreifen, d.h. der von dem Fahrer durch Betätigung der Lenkvorrichtung 1 vorgegebene Winkel wird nur "zum Teil an das Rad 2 weitergegeben".)

Damit der Fahrer aber nicht den Eindruck bekommt, dass ihm die Kontrolle über das Fahrzeug entgleitet, wird das Überlagerungsdrehmoment MÜ bei dieser Ausführungsform der Erfindung so gewählt, dass die Änderung des Radwinkels α bzw. des Lenkwinkels immer kleiner als ein vorgegebener maximaler Verstellwinkel Δαmax bzw. Δδmax ist. Dies bedeutet, dass die Reduzierung der Abweichung des aktuellen Verhältnisses der beiden Winkel δ und α von der vorgegebenen Beziehung unter Normalbedingungen auf mehrere Betätigungen der Lenkvorrichtung 1 durch den Fahrer verteilt erfolgt. Dadurch bleibt sichergestellt, dass die automatische Korrektur auf einen zum sicheren Drehen der freien Lenkvorrichtung erforderlichen Wert begrenzt ist. Diese Ausführungsform wird vorzugsweise durch einen (in Fig., 1 schematisch dargestellten) Regelkreis 8 an dem elektromechanischen Wandler verwirklicht. In dem Regelkreis 8 wird eine Obergrenze für den durch das Überlagerungsmoment bewirkten Winkel festgelegt, so dass die beiden Winkel δ und α nicht schlagartig aneinander angepasst werden, sondern dass diese Anpassung sukzessive und für den Fahrer kaum spürbar erfolgt.

Zur Steigerung des Fahrkomforts während des assistierenden Eingriffes durch die Vergleichseinrichtung 6 und den elektromechanischen Wandler 7 wird vorzugsweise das Überlagerungsdrehmoment MÜ in Abhängigkeit von dem Ausgangssignal eines (nicht dargestellten) Geschwindigkeitssensors bestimmt. Insbesondere kann die Bestimmung des Überlagerungsdrehmomentes in Abhängigkeit von der Geschwindigkeit derart erfolgen, dass die erste Ableitung der zur Zentrierung erzeugten Winkelkomponente nach der Zeit von der Fahrgeschwindigkeit abhängt. Alternativ kann das Überlagerungsdrehmoment MÜ in Abhängigkeit von dem Lenkdrehmoment ML oder in Abhängigkeit von dem Lenkwinkel δ bestimmt werden.

Um Fahrer zu warnen, die mit einem derartig ausgerüsteten Fahrzeug noch nicht vertraut sind, wird vorzugsweise ein akustisches bzw. optisches Signal ausgegeben, wenn eine Abweichung von der vorgegebenen Beziehung zwischen dem Lenkwinkel δ und dem Radwinkel α vorliegt. Das Erzeugen eines solchen Warnsignals kann insbesondere von einer Signalschwelle abhängig gemacht werden, so dass das akustische bzw. optische Signal nur dann ausgegeben wird, wenn das Überlagerungsdrehmoment MÜ einen vorgegebener Wert überschreitet.

### Bezugszeichen

- 1: mechanische Lenkvorrichtung
- 2: gelenktes Rad
- 3: AFS- Überlagerungsaktuator
- 4: Lenkwinkelsensor
- 5: Radwinkelsensor
- 6: Vergleichseinrichtung
- 7: elektromechanischer Wandler
- 8: Regelkreis für elektromechanischen Wandler
- i_{ML}: vorgegebenes Übersetzungsverhältnis der Lenkung
- iₐₖₜ: aktuelles Übertragungsverhältnis der Lenkung
- α: Radlenkwinkel
- δ: Lenkvorrichtungswinkel
- sα: Radwinkelsignal
- sδ: Lenkwinkelsignal
- sv: Vergleichssignal
- ML: Lenkdrehmoment
- MÜ: Hilfsdrehmoment
- MR: Raddrehmoment
- Δαmax, Δδmax: maximaler Verstellwinkel

## Patentansprüche

1. Überlagerungslenksystem für ein Kraftfahrzeug mit einer mechanischen Lenkvorrichtung (1) für die Übertragung eines Lenkdrehmomentes (ML) mit einem vorgegebenen Übertragungsverhältnis (i_{ML}) auf wenigstens ein gelenktes Rad (2), einem Überlagerungsaktuator (3) zwischen der Lenkvorrichtung (1) und dem wenigstens einen gelenkten Rad (2) für die Überlagerung des Lenkdrehmomentes (ML) mit einem Überlagerungsdrehmoment (MÜ) zu einem Raddrehmoment (MR) und einem mit der Lenkvorrichtung (1) verbundenen Lenkwinkelsensor (4) zum Erzeugen eines einem Winkel (δ) der Lenkvorrichtung (1) entsprechenden Lenkwinkelsignals (sδ),
**gekennzeichnet durch**
einen mit dem wenigstens einen gelenkten Rad (2) verbundenen Radwinkelsensor (5) zum Erzeugen eines einem Winkel (α) des wenigstens einen gelenkten Rades (2) entsprechenden Radwinkelsignals (sα),
eine Vergleichseinrichtung (6) für das Vergleichen des Lenkwinkelsignals (sδ) und des Radwinkelsignals (sα) und für das Erzeugen eines Vergleichssignals (sv) in Abhängigkeit von dem Lenkwinkel (δ) und dem Radwinkel (α), und
einen elektromechanischen Wandler (7) für das Erzeugen des Überlagerungsdrehmomentes (MÜ), wenn das Vergleichssignal (sv) eine Abweichung von einer vorgegebenen Beziehung zwischen dem Lenkwinkel (δ) und dem Radwinkel (α) des wenigstens einen gelenkten Rades (2) anzeigt, so dass die Abweichung reduziert wird.

2. Überlagerungslenksystem nach Anspruch 1,
**dadurch gekennzeichnet, dass**
bei Stillstand des Fahrzeugs das Überlagerungsdrehmoment (MÜ) erzeugt wird, so dass sich die Stellung der mechanischen Lenkvorrichtung (1) ändert, bis die Abweichung von der vorgegebenen Beziehung beseitigt ist.

3. Überlagerungslenksystem nach Anspruch 1 oder 2,
**dadurch gekennzeichnet, dass**
während der Fahrt das Überlagerungsdrehmoment (MÜ) die gleiche Richtung wie das Lenkdrehmoment hat, so dass das aktuelle Übertragungsverhältnis (iₐₖₜ) größer als das vorgegebene Übertragungsverhältnis (i_{ML}) ist.

4. Überlagerungslenksystem nach einem der vorangehenden Ansprüche,
**dadurch gekennzeichnet, dass**
während der Fahrt das Überlagerungsdrehmoment (MÜ) in Abhängigkeit von dem Ausgangssignal eines Geschwindigkeitssensors bestimmt wird.

5. Überlagerungslenksystem nach einem der vorangehenden Ansprüche,
**dadurch gekennzeichnet, dass**
während der Fahrt das Überlagerungsdrehmoment (MÜ) in Abhängigkeit von dem Lenkdrehmoment (ML) bestimmt wird.

6. Überlagerungslenksystem nach einem der vorangehenden Ansprüche,
**dadurch gekennzeichnet, dass**
während der Fahrt das Überlagerungsdrehmoment (MÜ) in Abhängigkeit von dem Lenkwinkel (δ) bestimmt wird.

7. Überlagerungslenksystem nach einem der vorangehenden Ansprüche,
**dadurch gekennzeichnet, dass**
ein akustisches und/oder optisches Signal ausgegeben wird, wenn das Vergleichssignal (sv) eine Abweichung von der vorgegebenen Beziehung zwischen dem Lenkwinkel (δ) und dem Radwinkel (α) des wenigstens einen gelenkten Rades (2) anzeigt.

8. Überlagerungslenksystem nach einem der vorangehenden Ansprüche,
**dadurch gekennzeichnet, dass**
ein akustisches und/oder optisches Signal ausgegeben wird, wenn das Überlagerungsdrehmoment (MÜ) größer als ein vorgegebener Wert ist.

9. Überlagerungslenksystem nach einem der Ansprüche 1 und 3 bis 8,
**dadurch gekennzeichnet, dass**
das Überlagerungsdrehmoment (MÜ) so gewählt ist, dass die Änderung des Radwinkels (α) und/oder des Lenkwinkels (δ) kleiner als ein vorgegebener Wert (Δαmax, Δδmax) ist.

10. Überlagerungslenksystem nach Anspruch 1 oder 2,
**dadurch gekennzeichnet, dass**
das Überlagerungsdrehmoment (MÜ) nur erzeugt wird, solange eine Bewegung des Fahrzeugs unterbunden wird.
